# EUROPEAN PATENT APPLICATION

(11) **EP 2 770 696 A1**
(43) Date of publication of application: **27.08.2014**
(21) Application number: 13305216.7
(22) Date of filing: 26.02.2013
(51) Int. Cl.: H04L 29/08, H04L 12/28

(54) **Method of data transfer and corresponding device**

(71) Applicant: Thomson Licensing, 92130 Issy-les-Moulineaux (FR)
(72) Inventor: Defrance, Serge, 35576 Cesson-Sévigné (FR); Tapie, Thierry, 35576 Cesson-Sévigné (FR); Le Roux, Jean, 35576 Cesson-Sévigné (FR)
(74) Representative: Perrot, Sébastien

(57) **Abstract**

An intermediate device such as a gateway is used for transfer or data from a first network to a second network, these networks being interconnected by the intermediate device, that is particularly advantageous in terms of data item selection and transfer.

## Description

### 1. Field of invention.

The present invention relates to the field of data transfer over communication networks, and in particular to the field of transferring data from a local network device to storage in a wide area network.

### 2. Technical background.

Today, many households have multiple devices that are connected to the Internet via a home gateway via for example a Digital Subscriber Line. The home gateway thus plays a central role in the home network. While the data communication speed on the home network is symmetric (i.e. a same transfer bit rate for reception and transmission) and is satisfactory high, the data communication speed via the shared access line to the Internet remains asymmetric. Internet access offers are based on the assumption that users download more information from the Internet than that they upload to it. In every-day use this situation is convenient to the user. But the slow uplink between the home network and the Internet quickly becomes a bottleneck when the home network device user wants to upload data of important size (photos, videos) to the Internet. This situation can occur when the user uses a cloud storage data backup service to protect against data loss, or when uploading a photo collection to a server for sharing with other users. The European Patent application EP 12305705.1, discusses a method and device for data transfer from a first network (such as a home network) to a second network (such as the Internet), the gateway offering sophisticated archiving features to the devices in the home network. However, there are still many tasks that are left to the user, such as file selection and transfer to the gateway, and handling of security aspects that come into play when transferring data over the Internet. Choosing files from the plurality of files than can be found on the plurality of home network devices and transferring them to the gateway, then instructing the gateway to transfer them to the second network still remains a tedious task in absence of a satisfying solution that takes into account the new role of the gateway.

### 3. Summary of the invention.

The purpose of this invention is to solve the problem discussed in the technical background section by means of a method and device of data transfer according to the invention.

Therefore, the current invention comprises a method of transferring data items from devices connected in a first network to a storage service in a second network, the method being implemented by an intermediate device connecting the first network with the second network, the method comprising a step of receiving a request for connection from one of the devices connected in the first network, referred to as connecting device; a step of identifying a user associated to the connection; a step of obtaining a list of data items that are stored in the devices connected in the first network and for which the user has access rights; a step of presenting the list of data items to the connecting device; a step of receiving, from the connecting device, of a request for transferring data items, selected from the list of data items, to the storage service in the second network; a step of copying of the selected data items from the first network devices to a storage space in the intermediate device; and a step of transferring of copied data items from the storage space in the intermediate device to the storage service in the second network.

According to a variant embodiment of the method of the invention, the method comprises a step of copying, to the storage space in the intermediate device, of data items selected from the list of data items and which are stored in the connecting device before copying of data items selected from the list of data items and which are stored by other devices connected in the first network than the connecting device.

According to a variant embodiment of the method of the invention, the copying step is suspended if not completed upon disconnection of a device connected in the first network from which data copying is ongoing, and wherein a suspended copying step is resumed upon reconnection of the device.

According to a variant embodiment of the method of the invention, the intermediate device sets up a secure connection with the storage service in the second network.

According to a variant embodiment of the method of the invention, theh method further comprises a step of transmitting, to the connecting device, of information informing the connecting device of completion of copying of data items selected from the list and that are stored in the connecting device.

The current invention also relates to a data transfer device (111, 400), the device implementing the method of the invention, the device comprising: a retriever module (408) for retrieving data stored by devices in the first network; a storage space (401) for storing of data items to be transferred from the devices in the first network to the second network; a transfer module (402) for transferring of data from the devices in the first network to the storage space and from the storage space to the second network; a timing module (405) for providing of a common clock for the synchronization between modules of the device; a network interface (403) for connection of the device to the first network; a second network interface (406) for connection of the device to the second network; a memory (407) for storing of data and instructions needed for operation of the device; a central processing unit (404) for processing of instructions comprised in the memory.

The discussed advantages and other advantages not mentioned in this document will become clear upon the reading of the detailed description of the invention that follows.

### 4. List of figures.

More advantages of the invention will appear through the description of particular, non-restricting embodiments of the invention. The embodiments will be described with reference to the following figures:
Figure 1 shows a typical prior-art home network environment where the invention can be implemented.
Figure 2 illustrates data upload from a first network to a second network, implemented for example by an intermediate device such as GW 111 of figure 1.
Figure 3 shows an implementation of a device suited for implementing the invention and its different variant embodiments.
Figure 4 depicts an alternative embodiment of a device suited for implementing the method of the invention and its different variant embodiments.
Figure 5 is a flow-chart of the method of the invention according to a particular embodiment.

### 5. Detailed description of the invention.

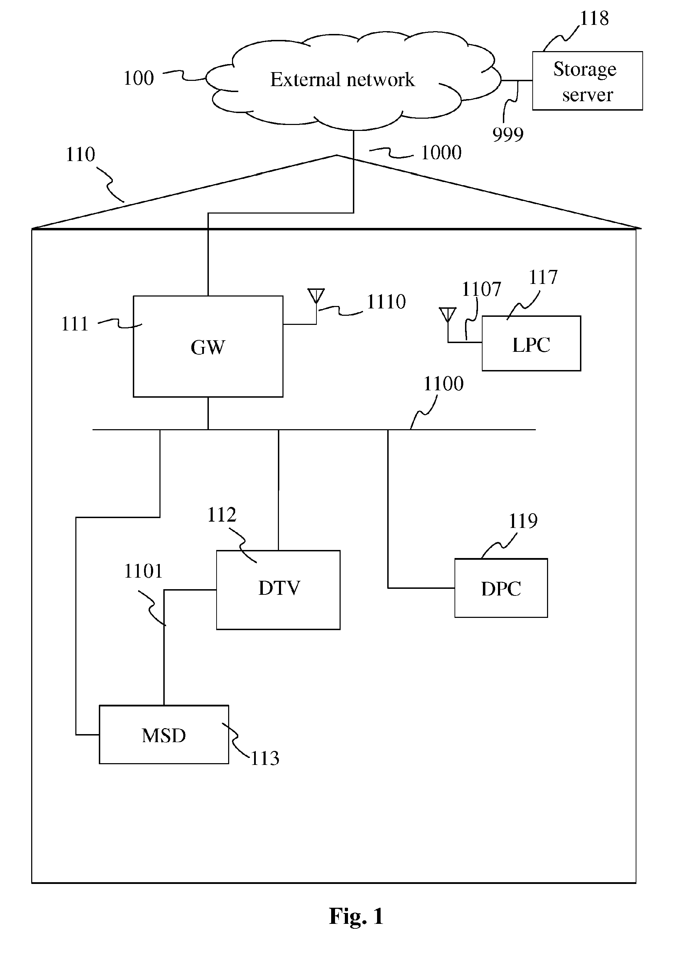

**Figure 1** shows an example of a typical local network where the invention can be implemented. A local network (1100,1110/1107) is present in user premises 110. An ADSL (Asymmetric Digital Subscriber Line) 1000 connects the user premises to an external network 100 such as the Internet that among others connects, via connection 999, a storage server 118 for distant storage of data detained in the local network. The local network comprises a wired network (1100) and a wireless network (1110, 1107), and comprises the following devices:
- a gateway (GW for GateWay) 111;
- a multi-media hard disc device 113 (MSD) for recording and playing of movies, photos, etc;
- a digital television 112 (DTV for Digital TeleVision) set with Internet connectivity;
- a laptop personal computer 117 (LPC);
- a desktop personal computer 119 (DPC).

These devices are interconnected with several types of connections:
- wired Ethernet connections for connecting MSD 113, DTV 112 and DPC 119 to GW 111;
- wireless WiFi connections for connecting LPC 117 to GW 111;
- HDMI connection 1101, connecting MSD 113 to DTV 112.

Local network devices 112, 113, 117 and 119 use their local network connection to the gateway 111 to get access to the Internet. Many devices in the local network, such as devices MSD 113, DPC 119 and LPC 117 incorporate data storage. The total amount of data stored devices in the home network can be important. A typical local network such as the home network of figure 1 comprises devices that store photos, movies, and music. The data stored on the devices is voluminous and precious for its users but no efficient safekeeping against data loss is undertaken. Data backup is unorganized because it is slow and cumbersome to set up; at best, data is copied on CD's or DVDs or external storage devices including a storage server 118 on the Internet on an individual, per user and per device basis. There is no systematic, organized and well managed data backup that ensures sufficient protection against data loss.

The invention proposes a solution for selecting data stored on the devices connected to the local network and for transferring the selected data to a storage connected to the wide area network in an easy and satisfying manner.

To further illustrate the invention, we consider that for a subscriber to an ADSL access service for connection to the Internet, such as the members of a family living in premises 110, upload bandwidth is limited. Uploading large amounts of data such as photos, videos etc is therefore time-consuming. In professional environments such as enterprise networks, backup techniques exist that for example create a weekly full backup archive. These techniques are efficient and function in a satisfactory way because the high-speed professional network can be used to transfer voluminous data in a short time. However, these techniques are not suited when voluminous data must be transferred from devices in a home network to a storage space in a wide area network via a slow uplink connection, because the home network device should remain connected to the storage server in the WAN during the transfer, which can be annoying: a typical example size of data to backup ('data archive') is 5Gbytes. This size is not uncommon, considering that a 1 hour HD (High Definition) video with a streaming bit rate of 10Mb/s takes more than 36 GB. With a mean uplink bandwidth of 128 kb/s, which is typical for a standard ADSL connection (ADSL offers upload bitrates up to 448Kbps in ideal circumstances; ADSL2+ allows upload bitrates up to 1.4Mbs under ideal circumstances). With for example 75% reserved for uploading the data archive, uploading this amount of data would take 4 days, 19 hours and 45 minutes (i.e. calculated in seconds: (5.10⁹ x 8 bits)/(3/4*128.10³)). The user of the network device would find it unacceptable that the user device must remain powered on during the long uploading process.

In local networks such as a home network, a central role is distributed to the gateway. The gateway interconnects the home network devices and has a high availability, because it remains powered on most of the time. Inside the home network, data transmission speed is high, e.g. 100Mbit/s or higher over wired connections. The home gateway can thus be used to discharge the home network devices from self-uploading of backup data, if it provides caching for uploading voluminous data from home network devices to storage in the external network. But a user of a home network device still has to bother with tasks such as selection of files to upload, transfer of selected files from home network devices to the gateway, and uploading data from the gateway to the storage space in the WAN. In addition, he should also take into account any security aspects that are related to transferring data from the home network to the gateway and from the gateway to the WAN. This is tedious. In practice, in case of a voluminous backup, this results in the backup simply not being done, thereby exposing the home network devices to data loss.

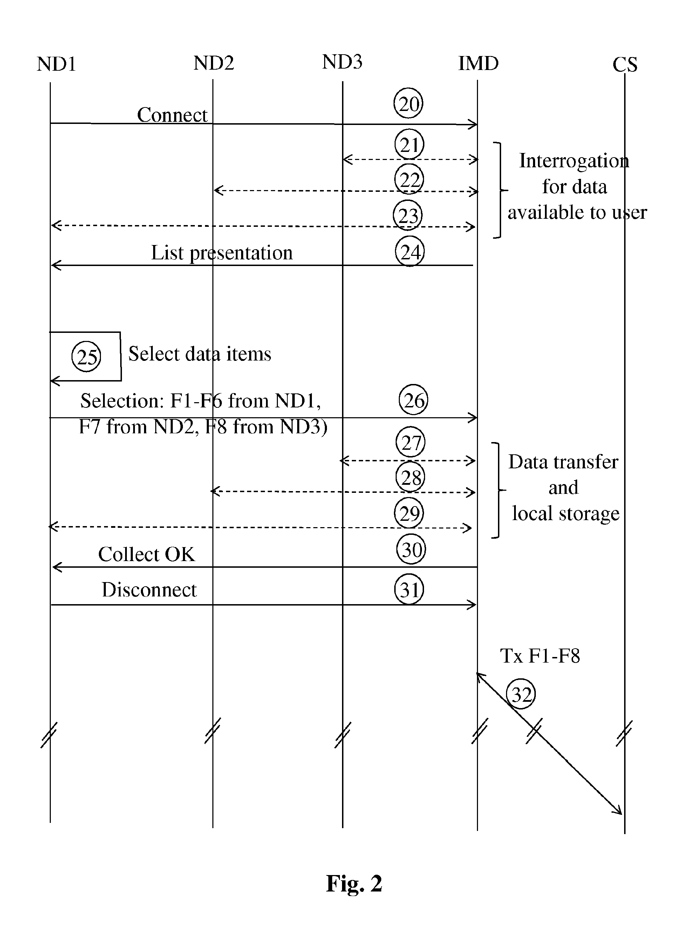

**Figure 2** is a sequence diagram showing a temporal relation between steps of a particular, non-limiting example embodiment of the invention.

The figure shows three network devices (NDs), ND1, ND2, ND3, connected in a first network (such as networks 1100, 1110/1107 of figure 1), an intermediate device IMD (such as gateway 111 of figure 1), and a storage service CS (such as that offered by storage server 118 of figure 1) in a second network (such as external network 100 of figure 1). In a first step 20, a user connects via a device in the first network (we will further refer to this device as 'the connecting device') to the intermediate device. This connection allows the intermediate device (IMD) to identify the user associated to the connection, so that it can be determined to which data items he/she has access rights in the first network to data items stored in the devices in the first network (ND1, ND2, ND3). The user identification can for example be done through an identifier transmitted with the connection request, or can for example be based on an IP address of the connecting device. Then, in steps 21-23, the intermediate device determines a list of data items stored in the devices in the first network and for which the identified user has access rights. This can be done by questioning, through the sending of requests and reception of answers, as depicted in steps 21-23, the devices in the first network for any data items that they detain and to which the user has access rights. From this, the intermediate device compiles a list of accessible data items for the identified user, which is presented in a step 24 to the connecting device. The list can comprise data items that are stored in the connecting device itself. According to the described embodiment, the intermediate device acts as an interface for sharing of data between devices in the first network. The intermediate device gives access for the devices in the first network to any data items shared by the other devices in the first network through a mechanism of imports/exports. Each device in the first network exports a share directory to the intermediate device, that imports the share directory, and that exports the share directory to other devices in the first network. Each of the devices in the first network mount the share directories exported by the intermediate device in its own file system. This way, the data items shared by the devices in the first network are presented to the devices in the first network as being logically attached to their file system, while still physically remaining stored on the devices in the first network that propose the shared data, i.e. without being copied or moved. According to a particular variant embodiment, as it is the intermediate device that exports the mount directories of the devices in the first network, the intermediate device has access to these directories and does therefore not need to interrogate the devices in the first network to find out which data items can be accessed by the user; therefore and according to this variant embodiment, steps 21 to 23 are executed internally in the intermediate device. In a step 25, the connecting device ND1 selects data items from the presented list and transmits in a step 26 a request to transfer the selected data items from the list to the storage service in the second network. Upon reception of this request, the intermediate device copies the selected data items in an internal storage space, and when this is done, optionally informs, in a step 30, the connecting device of the completion of the collecting of the selected data items by the intermediate device. The connecting device ND1 can now disconnect from the intermediate device, while the intermediate device in a data transfer step 32 copies the selected data items, that are now copied in the intermediate device's internal storage, to the storage service in the second network.

According to a variant embodiment of the invention, selected data items that are stored by the connecting device are copied immediately whereas selected data items that are not stored by the connecting device (ND1), are not immediately copied to the intermediate device's internal storage space. This way, any data items that reside on connecting device are copied to the intermediate device before any data items that resides on other devices in the first network, which allows the connecting device to disconnect immediately after the copy of the selected data items that are stored by it, the intermediate device continuing to copy the remaining selected data items from the other devices in the first network to its internal storage even if the connecting device is no longer connected to it.

According to a variant embodiment of the current invention, the intermediate device, when it detects that a device in the first network from which data is to be copied in the storage space inside the intermediate device has disconnected, suspends the copy operation for that device, and continues with the execution of the copy operation when the device reconnects again. This variant embodiment is advantageous in case the first network comprises devices that are frequently connected / disconnected from the first network, such as mobile telephones, tablets or portable computers.

According to a variant embodiment of the invention, the intermediate device handles all security related issues for the copying of the selected data items to the storage service in the second network, such as authentication and token exchange, and all that is needed to set up and use a secure communication channel between the intermediate device and the storage service. This way, the copying of data items to the storage service is completely transparent for users of the first network devices, which do not even have to bother with any security related aspects.

According to a variant embodiment of the present invention, the invention comprises an application module, running on the intermediate device, that presents the list of available data items and that comprises a drop box for copying of selected data items to the storage service in the second network. When a user has dropped selected files in the drop box, all the user has to do is simply selecting a transfer button, after which the user device can close the application, and/or can disconnect from the intermediate device, while the intermediate device continues to copy into internal storage space the selected files from the devices in the first network that detain the selected data items, and subsequently transfers copied data items to the storage service in the second network.

According to a variant embodiment of the present invention, the whole process of selecting data items, transferring to storage space in the intermediate device and transferring to the storage service in the second network is automatically executed by the intermediate device according to user preferences, in which a user indicates the data items that must be copied to the storage service, the date, time and frequency of the copy operation, etc. Such automatic copy operation can be further improved if the intermediate device 'synchronizes' with the devices in the first network, i.e. copies data items that are selected according to the user preferences on the intermediate device upon connection of the device in the first network.

The above described variants can be combined to form particular advantageous variant embodiments.

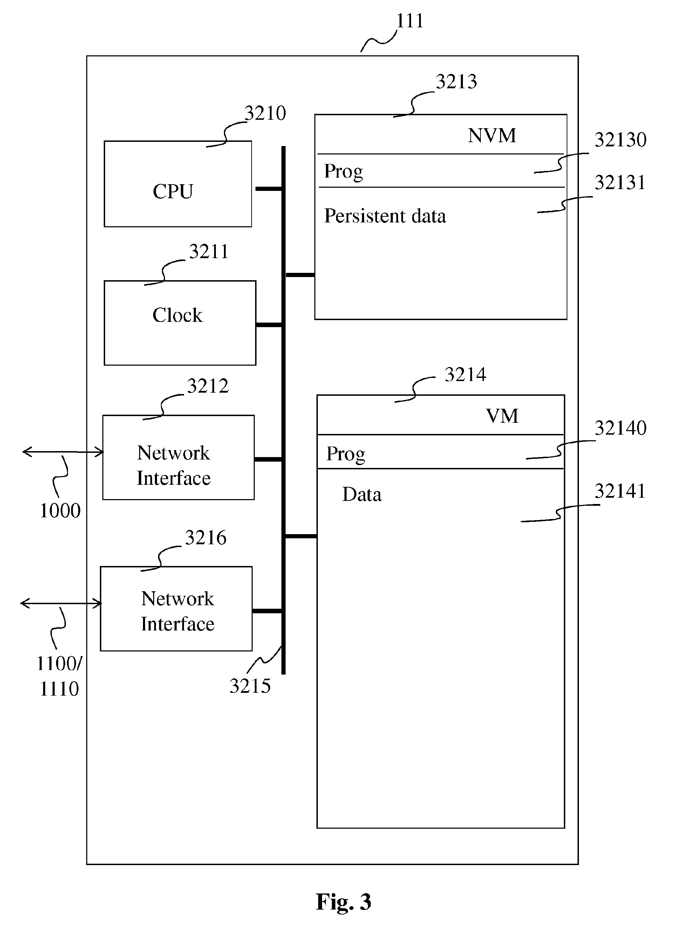

**Figure 3** shows an implementation of a device suited implementing the invention and its different variant embodiments, such as GW 111 of figure 1.

The device 111 comprises the following elements:
- a central processing unit 3210 or CPU;
- a clock unit 3211;
- a first network interface 3212;
- a second network interface 3216;
- a non-volatile memory NVM 3213; and
- a volatile memory VM 3214.

Processing unit 3210 can be implemented as a microprocessor, a custom chip, a dedicated (micro-) controller, and so on. Non-volatile memory NVM 3213 can be implemented in any form of non-volatile memory, such as a hard disk, non-volatile random-access memory, EPROM (Erasable Programmable ROM), and so on.

The non-volatile memory NVM 3213 comprises notably a register 32130 that holds a program representing an executable program comprising the method of data transfer according to the invention and a register 32131 comprising persistent data. When powered up, the processing unit 3210 loads the instructions comprised in NVM register 32130, copies them to VM register 32140, and executes them.

The VM memory 3214 comprises notably:
- a register 32140 comprising a copy of the program 'prog' of NVM register 32130 ;
- a data storage 32141, used for storing of data items to be transferred to the cloud storage, and for the storage of variables, parameters and other data needed during the execution of the programme in register 32140.

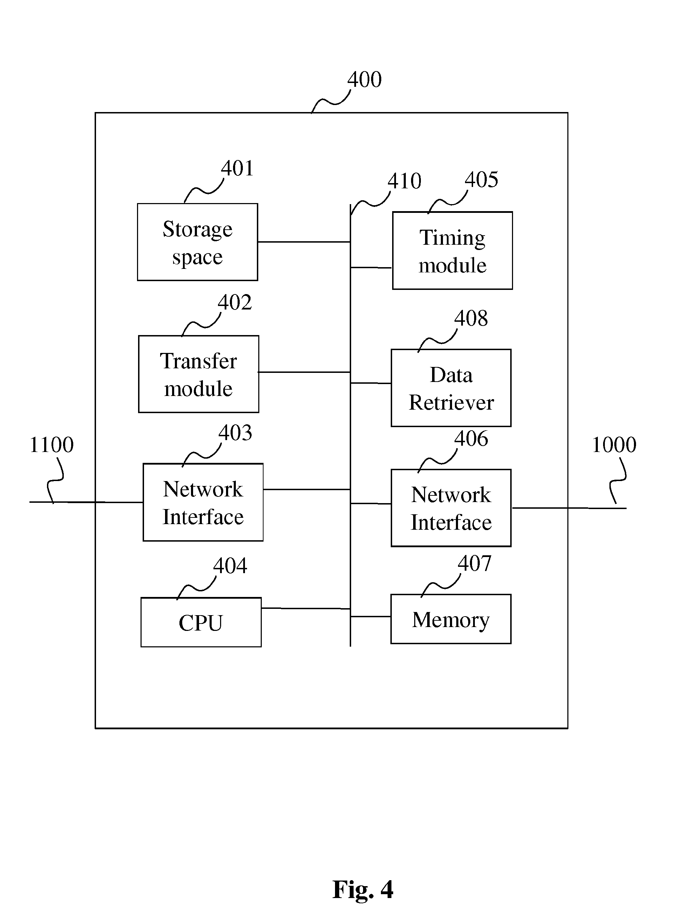

**Figure 4** depicts an alternative embodiment of an intermediate device suitable for implementing the method of the invention and its different variant embodiments. The device 400 comprises the following modules that are interconnected via a common data- and communication bus 410:
a retriever module (408) for retrieving data stored in the first network;
a storage space (401) for storing of data items to be transferred from the first network to the second network;
a transfer module (402) for transferring of data from the first network to the storage space and from the storage space to the second network;
a timing module (405) for providing of a common clock for the synchronization of the modules;
a network interface (403) for connection of the device to the first network;
a second network interface (406) for connection of the device to the second network;
a memory (407) for storing of data and instructions needed for operation of the device;
a central processing unit (404) for processing of instructions comprised in the memory.

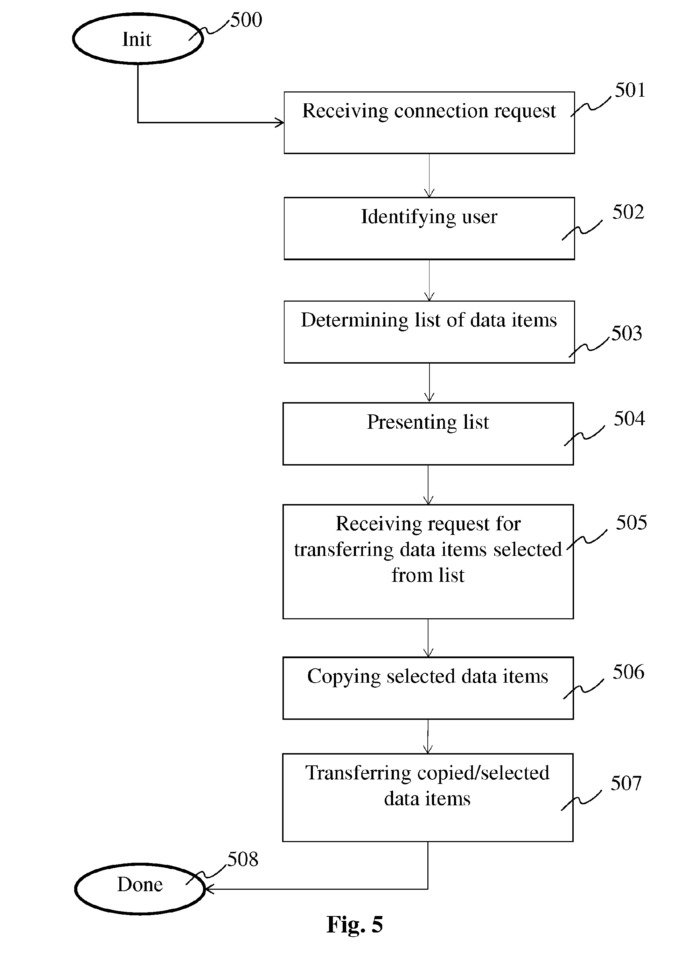

**Figure 5** illustrates a flow chart of a particular embodiment of the method of the invention. In a first initialization step 500, variables are initialized for the functioning of the method. When the method is implemented in an intermediate device such as device 111 of figure 3, the step comprises for example copying of data from non-volatile memory to volatile memory and initialization of memory. In a step 501, a request for connection is received from one of the devices in the first network (hereafter referred to as 'connecting' device). In a step 502, a user is identified that is associated to the received connection request. In a step 503, of a list of data items is determined, from data items that are stored in the devices in the first network and for which said user has access rights. In a step 504, a list of data items is presented to the first network device that transmitted the connection request (= the connecting device). In a step 505, a request is received from the connecting device for transferring data items, selected from said list, to the storage service in the second network. In a step 506, data items selected from the list are copied from the devices in the first network to a storage space in the intermediate device. In a step 507, data items copied in the copy step 506 are transferred from the storage space in the intermediate device to the storage service in the second network. The method ends in a step 508.

Other device architectures than illustrated by figure 3 and 4 are possible and compatible with the method of the invention. Notably, according to variant embodiments, the invention is implemented as a mix of hardware and software, or as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

## Claims

1. A method of transferring data items from devices connected in a first network to a storage service in a second network, the method being implemented by an intermediate device connecting said first network with said second network, the method comprising the following steps:
receiving (20) a request for connection from one of said devices connected in the first network, referred to as connecting device;
identifying a user associated to said connection;
obtaining (21, 22, 23) a list of data items that are stored in said devices connected in the first network and for which said user has access rights;
presenting (24) said list of data items to said connecting device;
receiving (26), from said connecting device, of a request for transferring data items selected from said list of data items to said storage service in said second network;
copying (27, 28, 29) of said selected data items from said first network devices to a storage space in said intermediate device;
transferring (32) of copied data items from said storage space in said intermediate device to said storage service in said second network.

2. The method according to Claim 1, comprising copying, to said storage space in said intermediate device, of data items selected from said list of data items and which are stored in said connecting device before copying of data items selected from said list of data items and which are stored by other devices connected in said first network than said connecting device.

3. The method according to Claim 1 or 2, wherein said copying step is suspended if not completed upon disconnection of a device connected in said first network from which data copying is ongoing, and wherein a suspended copying step is resumed upon reconnection of said device.

4. The method according to any of Claims 1 to 3, wherein said intermediate device sets up a secure connection with the storage service in the second network.

5. The method according to any of Claims 1 to 4, further comprising a step of transmitting, to said connecting device, of information informing said connecting device of completion of copying of data items selected from said list and that are stored in said connecting device.

6. A data transfer device (111, 400), wherein the device implements the method of claim 1, the device comprising:
a retriever module (408) for retrieving data stored by devices in the first network;
a storage space (401) for storing of data items to be transferred from the devices in the first network to the second network;
a transfer module (402) for transferring of data from the devices in the first network to the storage space and from the storage space to the second network;
a timing module (405) for providing of a common clock for the synchronization between modules of the device;
a network interface (403) for connection of the device to the first network;
a second network interface (406) for connection of the device to the second network;
a memory (407) for storing of data and instructions needed for operation of the device;
a central processing unit (404) for processing of instructions comprised in the memory.
